# FASCICULE DE BREVET EUROPEEN

(11) **EP 3 800 692 B1**
(45) Date de publication et mention de la délivrance du brevet: **21.06.2023**
(21) Numéro de dépôt: 19306277.5
(22) Date de dépôt: 03.10.2019
(51) Int. Cl.: B60K 1/04, B66F 9/075, H01M 50/20

(54) **PIÈCE DE FIXATION D'UN CHÂSSIS DE PERMUTATEUR DE BATTERIE DE CHARIOT ÉLÉVATEUR**
BEFESTIGUNGSTEIL EINES WECHSELRAHMENS FÜR GABELSTAPLERBATTERIEN
PART FOR ATTACHING A FRAME OF A FORKLIFT TRUCK BATTERY CHANGEOVER SWITCH

(43) Date de publication de la demande: 07.04.2021
(73) Titulaire: Toyota Material Handling France, 77607 Marne la Vallee Cedex 3 (FR)
(72) Inventeur: CALLEJON, André, 13880 Velaux (FR); HOAREAU, David, 13880 Velaux (FR)
(74) Mandataire: Casalonga

(56) Documents cités:
- CN-A- 109 160 458
- CN-Y- 201 390 635
- JP-A- 2004 059 173
- US-A1- 2009 078 483

## Description

La présente invention concerne la fixation d'un châssis de permutateur de batterie de chariot élévateur sur un chariot de permutateur.

De manière classique, des chariots élévateurs sont équipés d'actionneurs électriques alimentés en énergie électrique par une batterie électrique de stockage amovible. Par exemple, la batterie électrique de stockage alimente en énergie électrique un moteur électrique permettant de déplacer le chariot élévateur.

Lorsque la batterie d'un tel chariot élévateur est déchargée, on retire la batterie déchargée du chariot élévateur, on la place au voisinage d'un dispositif de recharge électrique et on la remplace par une batterie électrique chargée.

Compte tenu de la masse importante et des risques liés à la manipulation d'une batterie électrique de chariot élévateur, il est généralement prévu un permutateur dont la fonction est de déplacer la batterie entre le chariot élévateur et le dispositif de recharge électrique. Un permutateur comprend classiquement un chariot, un châssis fixé au chariot, un ensemble de réception et un actionneur faisant partie de l'ensemble de réception. Pour récupérer une batterie déchargée contenue dans un chariot élévateur, le chariot de permutateur déplace le permutateur de sorte que l'ensemble de réception se situe au voisinage du chariot élévateur. L'actionneur déplace alors la batterie déchargée depuis le chariot élévateur vers l'ensemble de réception. Le chariot de permutateur déplace ensuite le permutateur vers le dispositif de recharge électrique. L'actionneur déplace ensuite la batterie électrique déchargée depuis l'ensemble de réception jusqu'au dispositif de recharge électrique. Ces actions sont mises en oeuvre en ordre inverse lorsque la batterie est chargée afin de la déplacer depuis le dispositif de recharge électrique jusqu'à un chariot élévateur.

Un permutateur ainsi conçu apporte globalement satisfaction dans la mesure où il permet de manipuler les batteries électriques avant et après leur recharge.

JP 2004 059173 A décrit un permutateur équipé d'une table de support. Pendant le changement de la batterie, le permutateur se déplace vers le chariot élévateur de sorte que la table de support se trouve sous la batterie à laquelle est fixé un cadre spécifique.

Pour réaliser un permutateur, le châssis peut être fixé à un chariot élévateur classique, soit en modifiant la structure du chariot élévateur, soit par soudage. Dans les deux cas, la fixation du châssis nécessite une opération coûteuse à mettre en oeuvre.

L'invention a pour but de remédier à cet inconvénient.

Plus particulièrement, l'invention a pour but de permettre de réaliser un permutateur de batterie de chariot élévateur présentant un coût moins important sans pour autant nuire à sa fiabilité.

A cet effet, il est proposé une pièce de fixation d'un châssis de permutateur de batterie de chariot élévateur destinée à permettre la fixation dudit châssis à un chariot de permutateur, la pièce de fixation comprenant une première portion et une deuxième portion, la première portion comprenant un moyen d'accrochage à un parechoc dudit chariot de permutateur, la deuxième portion comprenant un moyen de fixation dudit châssis.

On peut ainsi fixer un châssis à un chariot de sorte à former un permutateur sans nécessiter de prévoir une conception particulière du chariot de permutateur. La pièce de fixation selon l'invention permet donc d'utiliser un chariot élévateur classique comme chariot de permutateur. Il en résulte la diminution du coût d'un permutateur de batterie de chariot élévateur.

De préférence, le moyen d'accrochage est apte à s'accrocher à un parechoc latéral dudit chariot de permutateur.

Avec un tel agencement, une pièce de fixation peut être accrochée sur les deux côtés du chariot de permutateur. Il en résulte un renforcement de la fixation du châssis au chariot de permutateur.

Selon un mode de réalisation, le moyen d'accrochage est apte à s'accrocher à un parechoc de chariot de permutateur à chargement latéral.

De préférence, le moyen de fixation comprend un évidement traversant.

Avantageusement, la deuxième portion comprend un bord de raccordement avec la première portion, deux bords adjacents au bord de raccordement et un bord opposé au bord de raccordement, l'évidement comprenant une rainure s'étendant depuis le bord opposé en direction du bord de raccordement.

L'évidement ainsi conçu facilite l'insertion de broches filetées destinées à verrouiller la fixation de la deuxième portion au châssis de permutateur.

On peut en outre prévoir que le moyen de fixation comprend un évidement traversant supplémentaire.

L'évidement traversant supplémentaire renforce la fixation du châssis à la pièce.

Selon un mode de réalisation, la première portion est plane, la deuxième portion étant plane et perpendiculaire à la première portion.

La pièce ainsi conçue est légère, peu encombrante et peut aisément être fixée au châssis et accrochée au parechoc du chariot de permutateur.

Dans un mode de réalisation, la première portion est oblongue et comprend une première extrémité raccordée à la deuxième portion et une deuxième extrémité opposée à la première extrémité, la deuxième extrémité comprenant un crochet.

Un crochet ainsi situé constitue un moyen d'accrochage pouvant aisément être utilisé pour accrocher la pièce de fixation au parechoc du chariot de permutateur. En particulier, lorsque plusieurs pièces de fixation sont utilisées en même temps, le crochet met en oeuvre un accrochage renforcé.

Dans un autre mode de réalisation, la deuxième portion comprend en outre un moyen d'attache à une autre pièce de fixation.

Une telle conception permet d'utiliser deux pièces de fixation en vis-à-vis pour accrocher le plus efficacement possible un ensemble de fixation au parechoc du chariot de permutateur.

Selon un mode de réalisation, le moyen d'attache comprend un orifice traversant.

Avantageusement, le moyen d'attache comprend au moins un orifice traversant supplémentaire.

Avantageusement, l'évidement traversant est cylindrique selon une première direction, l'orifice traversant étant cylindrique selon une deuxième direction parallèle à la première direction.

Selon un autre aspect, il est proposé un ensemble de fixation comprenant deux pièces de fixation telles que définies précédemment.

Selon encore un autre aspect, il est proposé un procédé de fixation d'un châssis de permutateur de batterie de chariot élévateur dans lequel on accroche au moins une pièce de fixation telle que définie précédemment et/ou un ensemble de fixation tel que défini précédemment à un parechoc d'un chariot de permutateur et on fixe le châssis à la première portion.

D'autres buts, caractéristiques et avantages de l'invention apparaîtront la lecture de la description suivante, donnée uniquement à titre d'exemple non limitatif, et faite en référence aux dessins annexés sur lesquels :
- les figures 1 et 2 sont des vues en perspective d'une salle de charge incorporant un permutateur selon un aspect de l'invention,
- la figure 3 est une vue de détail d'un ensemble de fixation du permutateur de la figure 1,
- la figure 4 représente en perspective une pièce de fixation équipant l'ensemble de fixation de la figure 3,
- la figure 5 est une vue de dessus de la pièce de fixation de la figure 4, et
- la figure 6 est une vue de côté de la pièce de fixation des figures 4 et 5.

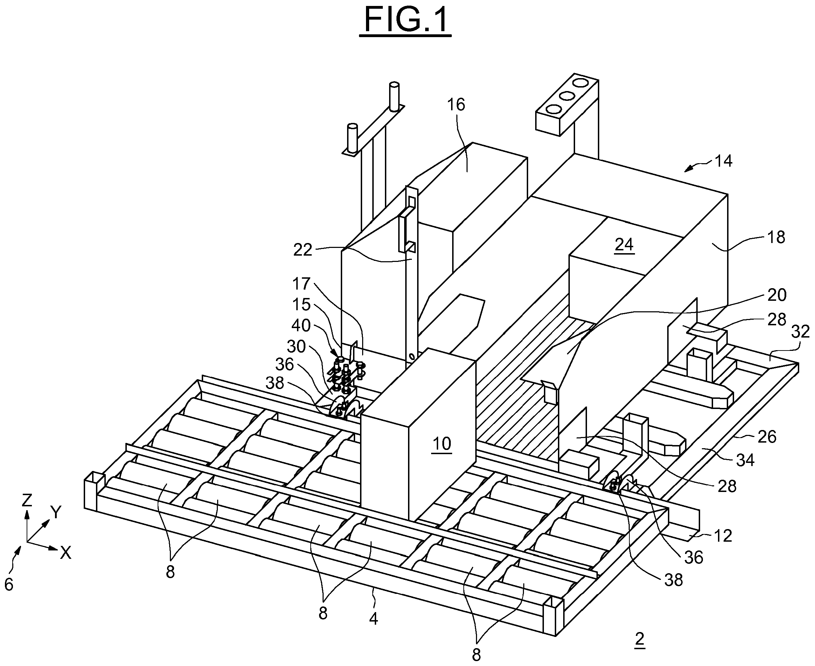

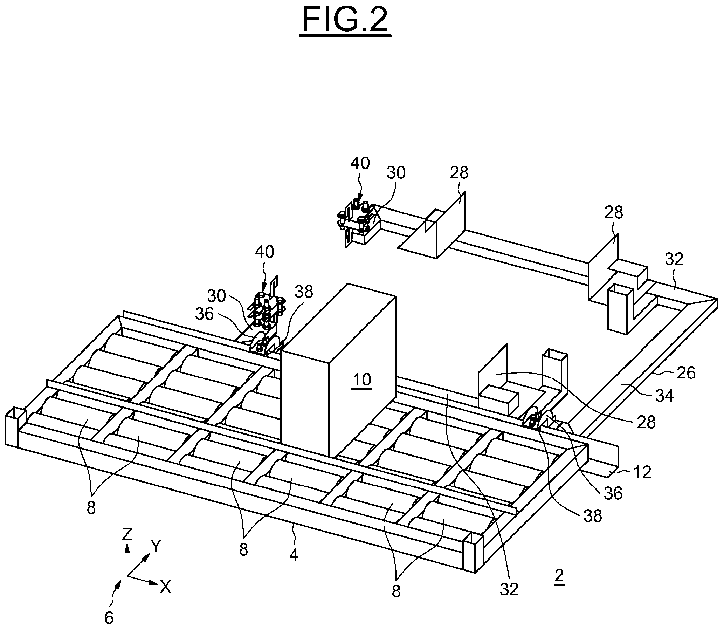

En référence aux figures 1 et 2, on a schématiquement représenté une salle de charge 2. La salle de charge 2 a pour fonction de permettre de recharger des batteries de chariots élévateurs, par exemple sur un site industriel ou sur une plate-forme de logistique. A cet égard, la salle de charge 2 est destinée à recevoir des chariots élévateurs équipés avec une batterie déchargée et à permettre de retirer la batterie déchargée, de recharger la batterie déchargée et de remplacer la batterie déchargée par une batterie chargée afin que le chariot élévateur reparte avec une batterie pleinement chargée.

Une structure de support 4 est solidaire du sol de la salle de charge 2. On définit une base vectorielle orthonormale 6 solidaire de la structure de support 4. La base 6 est constituée par un vecteur X, un vecteur Y et un vecteur Z. Le vecteur Z est orienté verticalement vers le haut lorsque la structure de support 4 repose normalement sur une surface plane horizontale.

Sauf lorsqu'il en sera indiqué autrement, les termes « supérieur », « inférieur », « haut » et « vertical » et les expressions « au-dessus » et « en dessous » seront compris comme se rapportant à la structure de support 4 lorsque celle-ci repose normalement sur une surface plane horizontale, c'est-à-dire en supposant le vecteur Z orienté verticalement vers le haut.

Dans la présente demande, sauf lorsqu'il en sera indiqué autrement, l'expression « surface cylindrique » désigne une surface engendrée par un ensemble de droites parallèles s'appuyant sur une courbe plane fermée.

La structure de support 4 limite une pluralité de logements 8, en l'espèce six logement 8. Chaque logement 8 comprend une pluralité de rouleaux (non référencés) destinés à supporter une batterie électrique 10 de chariot élévateur.

Un rail 12 est fixé sur le sol de la salle de charge 2. Le rail 12 est fixé le long d'un côté de la structure de support 4. Le rail 12 s'étend selon la direction du vecteur X. Plus particulièrement, le rail 12 est situé au voisinage d'une extrémité longitudinale de chacun des logements 8.

La salle de charge 2 comporte un permutateur 14. Le permutateur 14 est dit à chargement latéral car la direction du déplacement de la batterie 10 sur le permutateur 14 est perpendiculaire à la direction du déplacement du permutateur 14 par rapport à la structure de support 4. Le permutateur 14 est destiné à transporter la batterie électrique 10 entre un chariot élévateur (non représenté) et un logement 8.

Le permutateur 14 comprend un chariot de permutateur 16. Dans l'exemple illustré, le chariot 16 est identique à un chariot élévateur classique tel que le chariot élévateur auquel appartient la batterie 10. Toutefois, on peut bien entendu sans sortir du cadre de l'invention envisager un chariot de permutateur différent d'un chariot élévateur classique. Le chariot 16 comprend un parechoc arrière 15 et deux parechocs latéraux 17.

Le permutateur 14 comporte un ensemble de réception 18. L'ensemble 18 délimite une enceinte 20 destinée à recevoir la batterie 10. L'ensemble 18 comprend une barrière 22 pivotante par rapport à l'ensemble 18 autour de la direction du vecteur Y entre une position fermée (non représentée) et une position ouverte (représentée sur la figure 1). La barrière 22 permet, lorsqu'elle est en position fermée, d'empêcher que la batterie électrique 10 entre ou sorte de l'enceinte 20.

L'ensemble 18 comporte un actionneur 24, en l'espèce un électroaimant. L'actionneur 24 est capable d'être rendu solidaire avec la batterie 10 et de se déplacer selon la direction du vecteur Y. De la sorte, l'actionneur 24 peut pousser la batterie 10 depuis l'enceinte 20 vers un logement 8 ou attirer la batterie 10 depuis un logement 8 vers l'enceinte 20. La batterie 10 peut alors être déplacée selon la direction du vecteur Y dans les deux sens entre le logement 8 et l'enceinte 20.

Le permutateur 14 comporte un châssis 26. La figure 2 est une vue en perspective de la salle de charge 2 dans laquelle, par contraste avec la figure 1, le chariot 16 et l'ensemble 18 du permutateur 14 ont été volontairement omis pour illustrer le châssis 26. Le châssis 26 a pour fonction de supporter la masse de l'ensemble de réception 18 et de guider le déplacement du permutateur le long du rail 12. A cet effet, le châssis 26 comporte quatre plaques de fixation 28. Seules deux plaques 28 sont visibles sur la vue en perspective de la figure 1, les deux autres plaques 28 étant cachées par l'ensemble 18. Les plaques 28 sont en appui plan perpendiculaire au vecteur X avec des surfaces latérales de l'ensemble 18.

Le châssis 26 comporte deux poutres de raccordement 30, deux poutres adjacentes 32 et une poutre opposée 34. Seule une poutre 30 est visible sur la vue en perspective de la figure 1, l'autre poutre 30 étant cachée par le chariot 16. Les poutres 30 et 34 s'étendent selon la direction du vecteur Y. Les poutres 32 s'étendent selon la direction du vecteur X. Les poutres 32 sont relativement adjacentes aux poutres 30, la poutre 34 étant relativement opposée aux poutres 30. Plus précisément, les poutres 32 joignent la poutre 34 aux deux poutres 30 respectives. Le châssis 26 admet un plan de symétrie perpendiculaire au vecteur Y.

Le châssis 26 comporte deux supports 36 fixés à une même poutre 32. Les supports 36 portent chacun deux rouleaux 38 situés, par rapport à la direction du vecteur Y, d'un côté et de l'autre du rail 12. Les rouleaux 38 sont capables de pivoter par rapport aux supports 36 autour d'axes (non représentés) parallèles au vecteur Z. De la sorte, le châssis 26 est guidé en translation par rapport à la structure de support 4 selon la direction du vecteur X.

Le permutateur 14 comporte deux ensemble de fixation 40. Les ensembles 40 sont destinés à fixer le châssis 26 au chariot de permutateur 16. Les ensembles 40 sont en regard l'un par rapport à l'autre et fixés aux extrémités des poutres 30 respectives. Un seul ensemble 40 est visible sur la vue en perspective de la figure 1, l'autre ensemble 40 étant caché par le chariot 16.

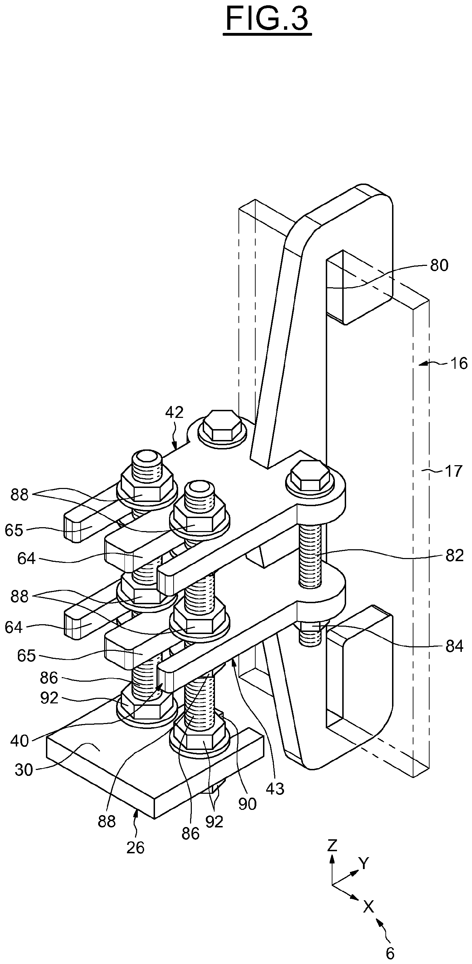

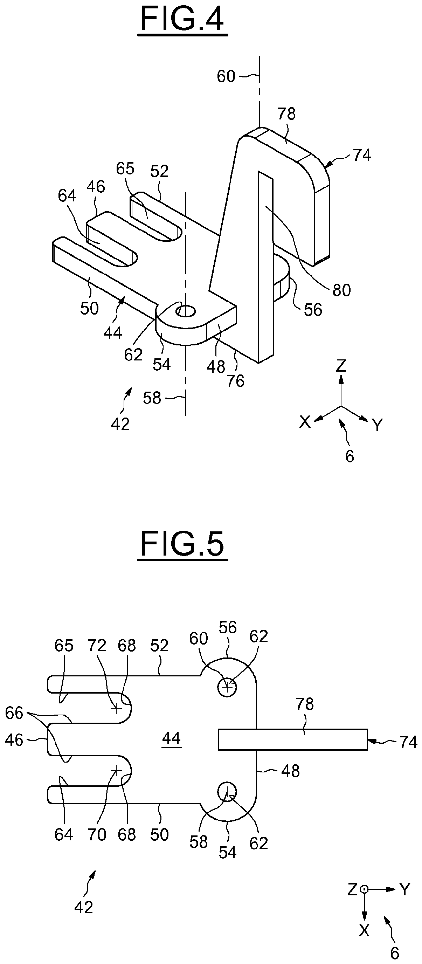

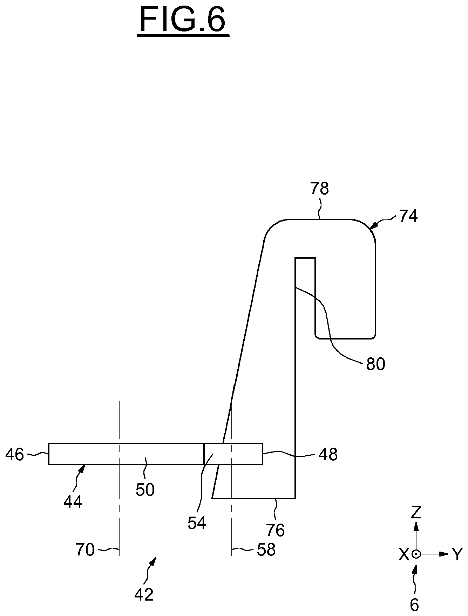

En référence à la vue de détail de la figure 3, chaque ensemble 40 est constitué de deux pièces de fixation 42 et 43 identiques. Les pièces 42 et 43 sont verticalement en regard l'une de l'autre, la pièce 42 étant supérieure et la pièce 43 étant inférieure. Les pièces 42 et 43 étant identiques, seule la pièce 42 va maintenant être décrite en référence aux figures 4 à 6.

La pièce 42 admet un plan de symétrie perpendiculaire au vecteur X. La pièce 42 comporte une portion plane horizontale 44 formant sensiblement un rectangle. Plus précisément, la portion 44 est horizontalement délimitée par quatre bords sensiblement rectilignes 46, 48, 50 et 52. Les deux bords 46 et 48 sont sensiblement parallèles au vecteur X et les deux bords 50 et 52 sont sensiblement parallèles au vecteur Y. Bien entendu, on ne sort pas du cadre de l'invention en envisageant une portion 44 délimitée par une forme distincte d'un rectangle.

La portion 44 comporte une oreille 54 et une oreille 56. L'oreille 54 s'étend depuis le bord 50 selon la direction du vecteur X et en sens opposé au vecteur X. L'oreille 56 s'étend depuis le bord 52 selon la direction et le sens du vecteur X. Les oreilles 54 et 56 sont situées à proximité du bord 48. Chaque oreille 54, 56 est délimitée à l'extérieur par une surface cylindrique (non référencée) à section axiale circulaire autour d'un axe de révolution respectif 58, 60.

La portion 44 comporte deux orifices traversant 62. Les offices 62 sont cylindriques à section axiale circulaire autour des axes 58 et 60 respectifs.

La portion 44 comporte deux rainures 64 et 65. Les rainures 64 et 65 traversent la portion 44 selon la direction du vecteur Z. Les rainures 64 et 65 sont cylindriques selon la direction du vecteur Z. En référence à la figure 5, la section axiale des rainures 64 et 64 comporte une portion rectiligne 66 formant un rectangle dont une extrémité est adjacente au bord 46. La section axiale des rainures 64 comporte une portion d'extrémité 68 adjacente à l'autre extrémité de la portion rectiligne 66. La portion d'extrémité 68 de la section axiale de chaque rainure 64, 65 forme un demi-cercle autour d'un axe de révolution 70, 72 respectif.

De nouveau en référence la figure 4, la pièce 42 comporte une portion plane verticale 74. La portion 74 est perpendiculaire au vecteur X. La portion 74 est oblongue et s'étend verticalement entre deux extrémités 76 et 78.

La portion 74 est fixée à la portion 44 au niveau de son extrémité 76. Dans l'exemple illustré, la portion 74 est reçue dans une rainure horizontale (non référencée) s'étendant dans la portion 44 depuis le bord 48 et les portions 44 est 74 sont soudées ensemble au niveau de cette rainure horizontale. Toutefois, on peut bien entendu sans sortir du cadre de l'invention envisager d'assembler d'une manière différente les portions 44 et 74. La portion 74 comprend un crochet 80 situé au voisinage de l'extrémité 78.

Il va maintenant être décrit un procédé pour fixer le châssis 26 au chariot 16 en référence à la figure 3.

Dans un premier temps, deux pièces 42 et 43 sont disposées verticalement en regard l'une par rapport à l'autre, les portions 44 des pièces 42 et 43 étant horizontales, l'extrémité 76 de la pièce 43 inférieure étant au-dessus, l'extrémité 76 de la pièce 42 supérieure étant en dessous. A ce stade, l'ensemble 40 admet un plan de symétrie horizontal.

Dans un deuxième temps, le crochet 80 de la pièce 42 supérieure est disposé au-dessus du parechoc latéral 17 et le crochet 80 de la pièce 43 inférieure est placé en dessous du parechoc latéral 17. Les pièces 42 et 43 sont rapprochées l'une de l'autre jusqu'à ce que les crochets 80 entourent le parechoc 17. De la sorte, l'ensemble 40 est accroché au parechoc 17.

Dans un troisième temps, deux vis 82 sont introduites dans les orifices 62 des pièces 42. Des écrous 84 sont serrés sur les vis 82. De la sorte, les pièces 42 sont attachées l'une par rapport à l'autre et la fixation du parechoc 17 à l'ensemble 40 est solidement verrouillée.

Dans un quatrième temps, deux broches filetées 86 sont introduites dans les rainures 64 et 65 des pièces 42 et 43. Des écrous 88, en l'espèce huit écrous 88, fixent les broches 86 aux pièces 42 et 43. Une extrémité inférieure des broches 86 est reçue dans des rainures 90 pratiquées dans une poutre 30. Les rainures 90 s'étendent depuis une extrémité longitudinale de la poutre 30 selon la direction du vecteur X. Des écrous 92, en l'espèce quatre écrou 92, rendent les branches filetées 86 solidaires de la poutre 30. Lorsque les écrous 92 sont serrés, le châssis 26 est fixé au chariot 16.

Ainsi, l'invention permet de fixer un châssis à un chariot de manière à réaliser un permutateur sans pour autant prévoir une conception particulière du chariot de permutateur, ou nécessiter de souder une pièce sur un chariot. En particulier, la fixation est possible pour diverses épaisseurs verticales du parechoc du chariot de permutateur et en utilisant un parechoc latéral, le parechoc arrière ou un parechoc avant. On peut ainsi réaliser un permutateur à moindre coût.

## Revendications

1. Pièce de fixation (42, 43) d'un châssis (26) de permutateur (14) de batterie (10) de chariot élévateur destinée à permettre la fixation dudit châssis (26) à un chariot de permutateur (16), la pièce de fixation (42, 43) comprenant une première portion (74) et une deuxième portion (44), la première portion (74) comprenant un moyen d'accrochage à un parechoc (15, 17) dudit chariot de permutateur (16), la deuxième portion (44) comprenant un moyen de fixation dudit châssis (26).

2. Pièce de fixation (42, 43) selon la revendication 1, dans laquelle le moyen d'accrochage est apte à s'accrocher à un parechoc latéral (17) dudit chariot de permutateur (16).

3. Pièce de fixation (42, 43) selon la revendication 1 ou 2, dans laquelle le moyen d'accrochage est apte à s'accrocher à un parechoc (15, 17) de chariot de permutateur à chargement latéral.

4. Pièce de fixation (42, 43) selon l'une quelconque des revendications 1 à 3, dans laquelle le moyen de fixation comprend un évidement traversant.

5. Pièce de fixation (42, 43) selon la revendication 4, dans laquelle la deuxième portion (44) comprend un bord de raccordement (48) avec la première portion (74), deux bords adjacents (50, 52) au bord de raccordement (48) et un bord opposé (46) au bord de raccordement (48), l'évidement comprenant une rainure (64, 65) s'étendant depuis le bord opposé (46) en direction du bord de raccordement (48).

6. Pièce de fixation (42, 43) selon la revendication 4 ou 5, dans laquelle le moyen de fixation comprend un évidement traversant supplémentaire.

7. Pièce de fixation (42, 43) selon l'une quelconque des revendications 1 à 6, dans laquelle la première portion (74) est plane, la deuxième portion (44) étant plane et perpendiculaire à la première portion.

8. Pièce de fixation (42, 43) selon l'une quelconque des revendications 1 à 7, dans laquelle la première portion (74) est oblongue et comprend une première extrémité (76) raccordée à la deuxième portion (44) et une deuxième extrémité (78) opposée à la première extrémité (76), la deuxième extrémité (78) comprenant un crochet (80).

9. Pièce de fixation (42, 43) selon l'une quelconque des revendications 1 à 8, dans laquelle la deuxième portion (44) comprend en outre un moyen d'attache à une autre pièce de fixation.

10. Pièce de fixation (42, 43) selon la revendication 9, dans laquelle le moyen d'attache comprend un orifice traversant (62).

11. Pièce de fixation (42, 43) selon la revendication 10, dans laquelle le moyen d'attache comprend au moins un orifice traversant supplémentaire (62).

12. Pièce de fixation (42, 43) selon les revendications 4 et 10 combinées, dans laquelle l'évidement traversant est cylindrique selon une première direction (70, 72), l'orifice traversant (62) étant cylindrique selon une deuxième direction (60, 62) parallèle à la première direction (70, 72).

13. Ensemble de fixation (40) comprenant deux pièces de fixation (42, 43) selon l'une quelconque des revendications 1 à 12.

14. Procédé de fixation d'un châssis (26) de permutateur (14) de batterie (10) de chariot élévateur dans lequel on accroche au moins une pièce de fixation (42, 43) selon l'une quelconque des revendications 1 à 12 et/ou un ensemble de fixation (40) selon la revendication 13 à un parechoc (15, 17) d'un chariot de permutateur (16) et on fixe le châssis (26) à la seconde portion (44).

## Patentansprüche

1. Befestigungsstück (42, 43) eines Rahmens (26) eines Umschalters (14) einer Batterie (10) eines Gabelstaplers, das dazu bestimmt ist, die Befestigung des Rahmens (26) an einem Umschalterwagen (16) zu ermöglichen, wobei das Befestigungsstück (42, 43) einen ersten Abschnitt (74) und einen zweiten Abschnitt (44) umfasst, wobei der erste Abschnitt (74) ein Mittel zum Einhaken an einem Stoßfänger (15, 17) des Umschalterwagens (16) umfasst und der zweite Abschnitt (44) ein Mittel zur Befestigung des Rahmens (26) umfasst.

2. Befestigungsstück (42, 43) nach Anspruch 1, wobei das Mittel zum Einhaken geeignet ist, sich an einem seitlichen Stoßfänger (17) des Umschalterwagens (16) einzuhaken.

3. Befestigungsstück (42, 43) nach Anspruch 1 oder 2, wobei das Mittel zum Einhaken geeignet ist, sich an einem Stoßfänger (15, 17) eines seitlich beladenen Umschalterwagens einzuhaken.

4. Befestigungsstück (42, 43) nach einem der Ansprüche 1 bis 3, wobei das Mittel zur Befestigung eine durchgehende Vertiefung aufweist.

5. Befestigungsstück (42, 43) nach Anspruch 4, wobei der zweite Abschnitt (44) eine Anschlusskante (48) mit dem ersten Abschnitt (74), zwei an die Anschlusskante (48) angrenzende Kanten (50, 52) und eine der Anschlusskante (48) gegenüberliegende Kante (46) umfasst, wobei die Vertiefung eine Nut (64, 65) umfasst, die sich von der gegenüberliegenden Kante (46) in Richtung der Anschlusskante (48) erstreckt.

6. Befestigungsstück (42, 43) nach Anspruch 4 oder 5, wobei das Mittel zur Befestigung eine weitere durchgehende Vertiefung umfasst.

7. Befestigungsstück (42, 43) nach einem der Ansprüche 1 bis 6, wobei der erste Abschnitt (74) eben ist und der zweite Abschnitt (44) eben ist und senkrecht zum ersten Abschnitt verläuft.

8. Befestigungsstück (42, 43) nach einem der Ansprüche 1 bis 7, wobei der erste Abschnitt (74) länglich ist und umfasst ein erstes Ende (76), das mit dem zweiten Abschnitt (44) verbunden ist, und ein zweites Ende (78) gegenüber dem ersten Ende (76) aufweist, wobei das zweite Ende (78) einen Haken (80) aufweist.

9. Befestigungsstück (42, 43) nach einem der Ansprüche 1 bis 8, wobei der zweite Abschnitt (44) ferner ein Mittel zur Befestigung an einem anderen Befestigungsstück umfasst.

10. Befestigungsstück (42, 43) nach Anspruch 9, wobei das Mittel zur Befestigung eine durchgehende Öffnung (62) umfasst.

11. Befestigungsstück (42, 43) nach Anspruch 10, wobei das Mittel zur Befestigung eine durchgehende Öffnung (62) umfasst.

12. Befestigungsstück (42, 43) nach Anspruch 4 und 10 kombiniert, wobei die durchgehende Vertiefung in einer ersten Richtung (70, 72) zylindrisch ist, wobei die durchgehende Öffnung (62) in einer zweiten Richtung (60, 62) parallel zu der ersten Richtung (70, 72) zylindrisch ist.

13. Befestigungsanordnung (40) mit zwei Befestigungsstücken (42, 43) nach einem der Ansprüche 1 bis 12.

14. Verfahren zur Befestigung eines Rahmens (26) eines Umschalters (14) für eine Batterie (10) eines Gabelstaplers, bei dem man mindestens ein Befestigungsstück (42, 43) nach einem der Ansprüche 1 bis 12 und/oder eine Befestigungsanordnung (40) nach Anspruch 13 an einem Stoßfänger (15, 17) eines Umschalterwagens (16) einhängt und den Rahmen (26) an dem zweiten Abschnitt (44) befestigt.

## Claims

1. Part (42, 43) for attaching a frame (26) of a changeover unit (14) for changing a battery (10) of a forklift truck intended to allow said frame (26) to be attached to a changeover truck (16), the attaching part (42, 43) comprising a first portion (74) and a second portion (44), the first portion (74) comprising means for hooking onto a bumper (15, 17) of said changeover truck (16), the second portion (44) comprising means for attaching said frame (26) .

2. Attaching part (42, 43) according to claim 1, wherein the hooking means is capable of hooking onto a side bumper (17) of said changeover truck (16).

3. Attaching part (42, 43) according to claim 1 or 2, wherein the hooking means is capable of hooking onto a bumper (15, 17) of a side-loading changeover truck.

4. Attaching part (42, 43) according to any one of claims 1 to 3, wherein the attaching means comprises a through-recess.

5. Attaching part (42, 43) according to claim 4, wherein the second portion (44) comprises a connecting edge (48) connecting with the first portion (74), two edges (50, 52) adjacent to the connecting edge (48) and one edge (46) opposite the connecting edge (48), the recess comprising a groove (64, 65) extending from the opposite edge (46) towards the connecting edge (48).

6. Attaching part (42, 43) according to claim 4 or 5, wherein the attaching means comprises an additional through-recess.

7. Attaching part (42, 43) according to any one of claims 1 to 6, wherein the first portion (74) is planar, the second portion (44) being planar and perpendicular to the first portion.

8. Attaching part (42, 43) according to any one of claims 1 to 7, wherein the first portion (74) is oblong and comprises a first end (76) connected to the second portion (44) and a second end (78) opposite the first end (76), the second end (78) comprising a hook (80).

9. Attaching part (42, 43) according to any one of claims 1 to 8, wherein the second portion (44) further comprises means for fastening to another attaching part.

10. Attaching part (42, 43) according to claim 9, wherein the fastening means comprises a through-hole (62).

11. Attaching part (42, 43) according to claim 10, wherein the fastening means comprises at least one additional through-hole (62).

12. Attaching part (42, 43) according to claims 4 and 10 combined, wherein the through-recess is cylindrical in a first direction (70, 72), the through-hole (62) being cylindrical in a second direction (60, 62) parallel to the first direction (70, 72).

13. Attaching assembly (40) comprising two attaching parts (42, 43) according to any one of claims 1 to 12.

14. Method for attaching a frame (26) of a changeover unit (14) for changing a battery (10) of a forklift truck, wherein at least one attaching part (42, 43) according to any one of claims 1 to 12 and/or an attaching assembly (40) according to claim 13 is hooked onto a bumper (15, 17) of a changeover truck (16) and the frame (26) is attached to the second portion (44).
